# DEMANDE DE BREVET EUROPEEN

(11) **EP 1 749 727 A1**
(43) Date de publication de la demande: **07.02.2007**
(21) Numéro de dépôt: 06354023.1
(22) Date de dépôt: 24.07.2006
(51) Int. Cl.: B62B 1/12

(54) **Chariot de transport, notamment pour accessoires de plage ou de piscine**

(30) Priorité: 01.08.2005 FR 0508183
(71) Demandeur: Mata, Franck, 26000 Valence (FR)
(72) Inventeur: Mata, Franck, 26000 Valence (FR)
(74) Mandataire: Jouvray, Marie-Andrée

(57) **Abrégé**

Le chariot de transport (1) comporte une surface arrière, constituant le dos du chariot (1) et s'étendant entre des poignées de préhension (14) et une paire de roues (13). La surface arrière du chariot (1) est redressée dans une position de transport et disposée sensiblement parallèlement au sol dans une position d'utilisation. Le chariot (1) comporte une surface de support, sensiblement perpendiculaire à la surface arrière, des premiers moyens pour positionner un parasol (5) plié sensiblement parallèlement à la surface arrière du chariot (1) en position de transport et des seconds moyens agencés pour positionner le parasol (5) sensiblement perpendiculairement à la surface arrière du chariot (1) en position d'utilisation. Le chariot (1) comporte des lests (41, 42) de stabilisation en position d'utilisation.

## Description

### Domaine technique de l'invention

L'invention concerne un chariot de transport comportant :
- une surface arrière, constituant le dos du chariot et s'étendant entre des moyens de préhension et au moins une paire de roues, ladite surface arrière du chariot étant redressée dans une position de transport,
- une surface de support, sensiblement perpendiculaire à la surface arrière du chariot,
- des premiers moyens pour positionner un parasol plié sensiblement parallèlement à la surface arrière du chariot en position de transport,
- et des seconds moyens pour positionner le parasol dans une position d'utilisation.

### État de la technique

Pour de nombreuses activités en plein air, du type baignade, camping, pique-nique, pêche, etc., un matériel lourd et encombrant est souvent nécessaire. À titre d'exemple, les parkings pour véhicules ou les campings, notamment aux abords des plages ou des lieux de baignade, sont de façon générale relativement éloignés et il est souvent nécessaire de faire une longue marche pour atteindre le lieu de baignade. Le transport des accessoires de plage, du type parasol, glacière, matelas de plage, etc., devient alors un véritable problème. Les documents US 5 636 852 et US 6 113 129 ont ainsi proposé des chariots de transport d'accessoires, notamment d'accessoires de plage, permettant de résoudre en partie les inconvénients décrits ci-dessus.

Le document US 6 113 129 décrit notamment un chariot de transport à roulettes, pour accessoires de plage, comprenant une paire de roues et une poignée de préhension, définissant une surface arrière redressée du chariot, lors du déplacement du chariot. Le chariot comporte également une surface de support perpendiculaire à la surface arrière et destinée à recevoir, par exemple, une glacière, laquelle est maintenue par des bras de longueur réglable. Par ailleurs, le chariot comporte un premier orifice borgne de positionnement d'un parasol en position de transport, dans laquelle le parasol est fermé, et un second orifice débouchant adjacent, dans lequel s'insère le parasol en position d'utilisation, pour planter le parasol dans le sol.

Un tel chariot, même s'il permet le transport de plusieurs accessoires précis, présente un système complexe de réglage de la longueur et s'avère difficile à manier. Par ailleurs, le plantage du parasol dans le sol reste problématique, selon le type de sol sur lequel est posé le chariot.

### Objet de l'invention

L'invention a pour but de remédier aux inconvénients précités et a pour objet la réalisation d'un chariot de transport, notamment pour accessoires de plage, qui soit facile à manipuler, simple à déplacer et qui permette d'utiliser efficacement un parasol, quel que soit l'emplacement du chariot de transport.

Selon l'invention, ce but est atteint par un chariot de transport selon les revendications annexées et, plus particulièrement, par le fait que, la surface arrière du chariot étant disposée sensiblement parallèlement au sol dans ladite position d'utilisation, les seconds moyens sont agencés pour positionner le parasol sensiblement perpendiculairement à la surface arrière du chariot en position d'utilisation et le chariot comporte des moyens de stabilisation en position d'utilisation.

Un autre objet de l'invention concerne un élément de support pouvant servir de dossier ou d'appui-tête selon sa configuration.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
Les figures 1 et 2 représentent chacune une vue en perspective, respectivement en position de transport et en position d'utilisation, d'un premier mode de réalisation d'un chariot de transport selon l'invention.
La figure 3 représente une vue agrandie d'un système particulier de fixation d'un parasol en position d'utilisation du chariot de transport selon la figure 2.
Les figures 4 et 5 représentent chacune un élément dossier/appui-tête transporté par le chariot de transport selon les figures 1 et 2, respectivement dans une position d'appui-tête et dans une position de dossier.
La figure 6 représente une vue partielle agrandie du chariot de transport selon la figure 2, représenté sans les matelas et illustrant la fixation d'un accessoire sur le chariot.
La figure 7 représente le chariot de transport en position d'utilisation selon la figure 2, avec l'ensemble des accessoires disposés à côté du chariot.
La figure 8 représente le chariot de transport selon les figures 1 et 2, illustrant une position limite repliée de stockage.
Les figures 9 et 10 représentent chacune une vue de côté, respectivement en position de transport et en position d'utilisation, d'une variante de réalisation d'un chariot de transport selon l'invention.
La figure 11 représente une vue en perspective d'une armature métallique d'un chariot de transport selon les figures 9 et 10, représentée sans les accessoires transportés par le chariot.
Les figures 12 et 13 représentent chacune une vue de derrière du chariot de transport selon les figures 9 à 11, respectivement en position de transport et en position repliée de stockage.

### Description de modes particuliers de réalisation

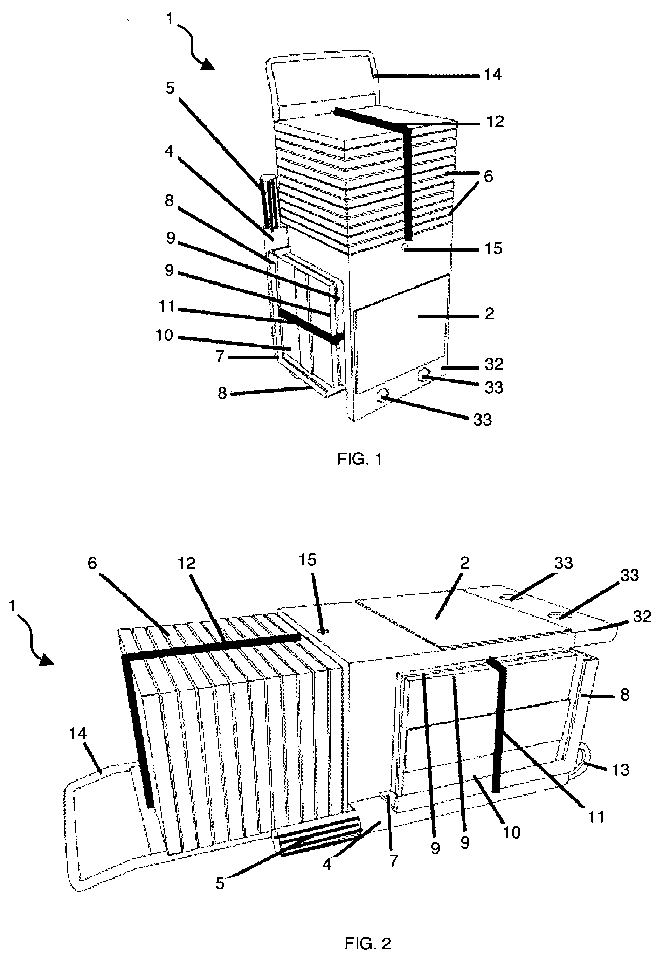

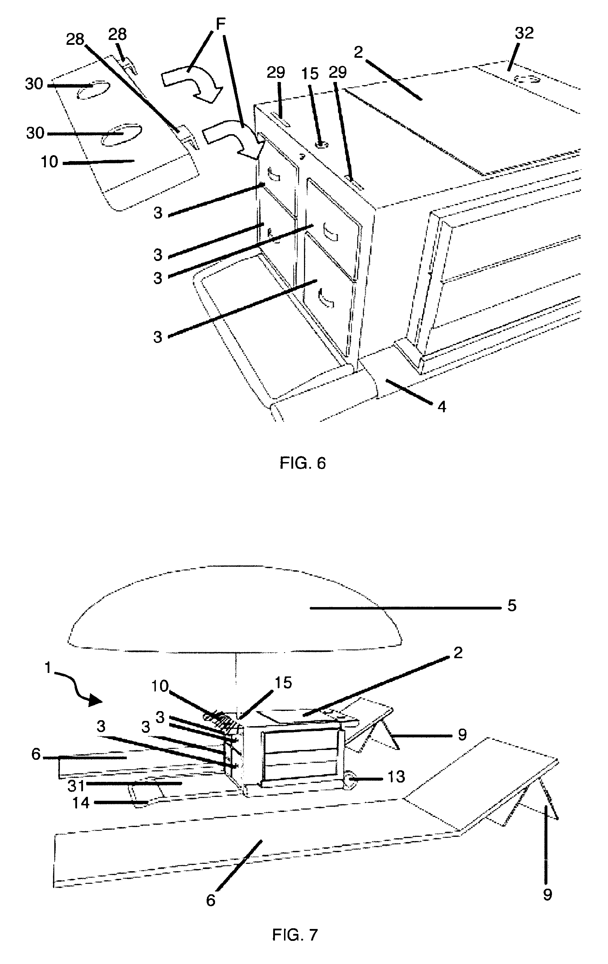

Dans le mode particulier de réalisation représenté sur les figures 1 et 2, le chariot de transport 1 comporte une glacière 2 et des tiroirs de rangement 3 (figure 6), définissant une structure rigide comportant une pluralité de parois pleines, réalisées par exemple en polychlorure de vinyle (PVC), et formant le corps principal rigide du chariot 1, de forme sensiblement parallélépipédique.

Comme représenté sur la figure 6, le chariot 1 peut comporter, par exemple, quatre tiroirs de rangement 3, de contenance plus ou moins grande. Le chariot 1 comporte un tube cylindrique 4, solidaire de la partie externe du corps principal défini par la glacière 2 et les tiroirs 3 et jouant le rôle de fourreau, pour le transport d'un parasol 5 fermé (représenté schématiquement sur les figures 1 et 2).

Sur les figures 1 à 8, le mode particulier de réalisation du chariot 1 est notamment destiné à transporter une pluralité d'accessoires de plages, en plus du parasol 5. Le chariot 1 peut transporter des matelas 6, stockés en position repliée sur les tiroirs de rangement 3 du chariot 1. Sur la figure 7, les matelas 6 sont représentés en position dépliée, prêts à l'utilisation à côté du chariot 1.

Comme représenté sur la figure 2, un dispositif en équerre 7, avec un rebord relevé 8, fait saillie du tube cylindrique 4 sur pratiquement toute sa longueur et permet le stockage et le maintien d'éléments dossier/appui-tête 9 et d'un support amovible 10 (figures 6 et 7), destinés à soutenir des gobelets en plastique ou des verres. Les éléments dossier/appui-tête 9 et le support amovible 10 porte-verres sont fixés, par exemple, par l'intermédiaire d'une première sangle élastique 11 latérale, disposée sur le côté du chariot 1. Par ailleurs, les matelas 6 en position repliée de stockage sur le chariot 1 sont également fixés au chariot 1, par exemple, par l'intermédiaire d'une seconde sangle élastique 12, solidaire de la partie supérieure du corps du chariot 1.

Comme représenté sur les figures 1, 2 et 7, le chariot de transport 1 peut prendre deux positions caractéristiques. La première position, représentée sur la figure 1, correspond à la position de déplacement du chariot 1, ou positon de transport des différents accessoires. Le déplacement du chariot 1 est notamment permis par l'intermédiaire d'une paire de roues 13 (figures 2, 7 et 8) et d'une poignée de préhension 14, permettant de tirer le chariot 1 et de le faire rouler.

Une surface arrière, s'étendant entre les roues 13, situées dans la partie inférieure du chariot 1, et la poignée de préhension 14, située dans la partie supérieure du chariot 1, constitue ainsi le dos du chariot 1. Dans cette position de transport, la surface arrière est alors redressée par rapport au sol.

La seconde position, représentée sur les figures 2 et 7, correspond à la position d'utilisation du chariot de transport 1. Dans cette position, le chariot de transport 1 est sensiblement allongé à l'horizontale, avec la surface arrière définie ci-dessus disposée sensiblement parallèlement au sol. Le chariot 1 fait alors office de socle lesté pour le parasol 5, notamment grâce à la présence du corps rigide du chariot 1 délimité par la glacière 2 et les tiroirs de rangement 3 et qui joue le rôle de moyens de stabilisation du chariot 1.

En position d'utilisation, le parasol 5 s'insère dans un orifice 15 correspondant, de préférence borgne, formé à l'extrémité supérieure du corps du chariot 1 (figures 2 et 7) et agencé pour positionner le parasol 5 sensiblement perpendiculairement à la surface arrière du chariot 1 en position d'utilisation. Ainsi, il est inutile de planter le parasol 5 dans le sol sur lequel se trouve le chariot 1 et ses parties constitutives, à savoir la glacière 2 et les tiroirs 3, font office de lests.

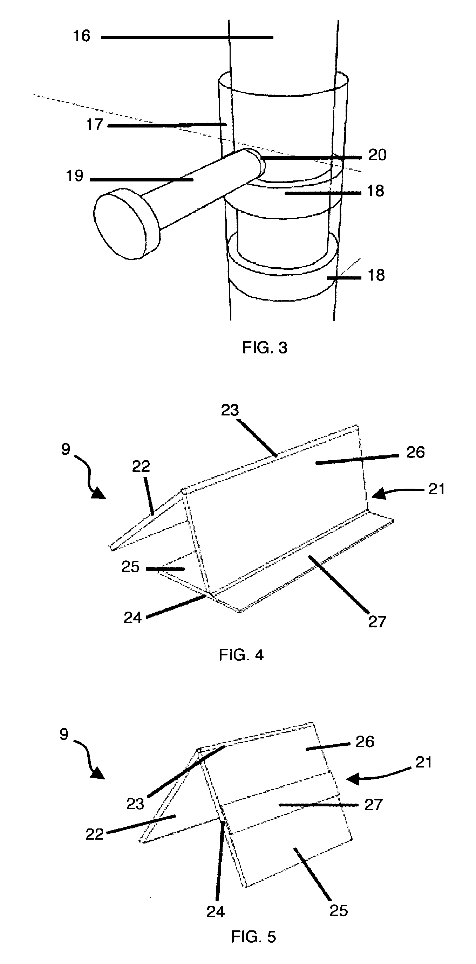

Comme représenté plus en détails sur la figure 3, illustrant un exemple particulier de fixation du parasol 5 dans le chariot 1, le parasol 5 comprend un pied télescopique 16, installé au préalable dans une gaine cylindrique 17 qui traverse verticalement le corps du chariot 1. L'élévation du pied télescopique 16 est limitée par un système de double butée 18, positionné sur la gaine cylindrique 17 et sur le pied télescopique 16. Une molette de réglage et de serrage 19 permet alors de traverser la gaine cylindrique 17, préalablement percé par un orifice 20 associé, et de bloquer fermement le pied du parasol 5 par pincement.

Sur les figures 4 et 5, illustrant plus en détails un élément dossier/appui-tête 9, chaque élément dossier/appui-tête 9 comprend un pan arrière 21 et un pan avant 22 et peut prendre deux positions de confort distinctes, en fonction de la longueur du pan arrière 21. Les deux pans 21, 22 sont articulés l'un par rapport à l'autre par un premier axe d'articulation 23. Le pan arrière 21 comporte un second axe d'articulation 24, divisant le pan arrière 21 en deux parties, une partie inférieure 25, servant de base pour l'élément 9 sur le sol (figure 5) et une partie supérieure 26, articulée avec le pan avant 22 par le premier axe d'articulation 23. La partie inférieure 25 du pan arrière 21 est prolongée par une butée 27, limitant l'articulation du pan arrière 21 et permettant de stabiliser la position de la partie inférieure 25 en alignement avec la partie supérieure 26 du pan arrière 21, dans la position représentée sur la figure 5.

Sur la figure 4, la partie inférieure 25 et la butée 27 du pan arrière 21 sont posées sur le sol, ce qui permet de réduire la hauteur du pan arrière 21 et d'obtenir un angle fort avec le pan avant 22. L'élément 9 joue alors un rôle d'appui-tête. Sur la figure 5, les parties inférieure 25 et supérieure 26 du pan arrière 21 sont alignées, la butée 27 surmontant le second axe d'articulation 24. Dans ce cas, les deux pans 21, 22 de l'élément 9 sont de même longueur et forment un angle relativement aigu. L'élément 9 joue alors le rôle de dossier, ou de repose dos, pour l'utilisateur.

Sur la figure 6, illustrant le chariot de transport 1 en position d'utilisation, représenté sans les matelas 6, le support amovible 10 porte-verres est, par exemple, du type encastrable avec deux crochets 28, s'insérant selon les flèches F dans des fentes 29 prédécoupées dans le corps du chariot 1, par exemple de part et d'autre de l'orifice 15 d'insertion du parasol 5 en position d'utilisation. Le support amovible 10 comporte, par exemple, deux trous 30 identiques, de préférence borgnes, d'un diamètre sensiblement identique ou inférieur à celui d'un verre de diamètre standard.

Sur la figure 7, le chariot de transport 1 en position allongée d'utilisation peut jouer notamment le rôle de table de plage. Le chariot 1 peut comporter une plaque d'appoint 31 se positionnant au centre de la poignée 14, de préférence en forme d'arche, du chariot 1 (figures 1 et 2) et servant de table plane supplémentaire, pour permettre de poser des objets, du type verres, cartes à jouer, etc.

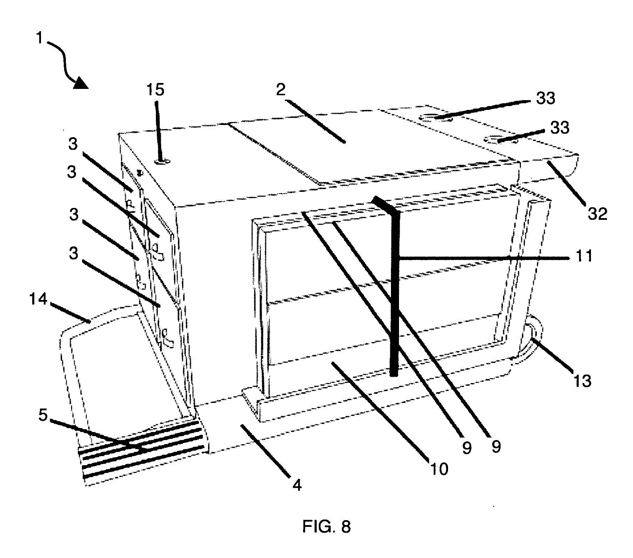

Par ailleurs, comme représenté sur les figures 7 et 8, le chariot 1 comporte un support fixe 32, servant à la fois de porte-verres, pour le chariot 1 en position d'utilisation (figures 2 et 7), et de pied de support, pour le chariot 1 en position de transport (figure 1). À cet effet, le support fixe 32 peut comporter deux trous 33, de préférence borgnes, destinés à coopérer avec des verres ou des gobelets en plastique de diamètre sensiblement identique ou inférieur.

Une surface de support, s'étendant des roues 13 au support fixe 32, sensiblement perpendiculairement à la surface arrière du chariot 1, constitue ainsi la surface de base du chariot de transport 1.

Dans le mode particulier de réalisation représenté sur la figure 8, le chariot de transport 1 est représenté dans une position repliée de stockage, correspondant à la position de repli maximal que peut prendre le chariot 1, pour son stockage et son transport, notamment dans un coffre de voiture.

Dans cette position, les matelas 6 sont retirés du chariot 1 et sont stockés séparément et la poignée de préhension 14 du chariot 1 se rétracte à l'intérieur du corps du chariot 1, par exemple par l'intermédiaire d'un système de coulissement télescopique. Par ailleurs, les roues 13 peuvent également être démontables, pour faciliter le stockage du chariot 1.

À titre d'exemple, un chariot de transport 1 a une longueur de l'ordre de 60cm, en position rétractée de stockage (figure 8), à 90cm, en position d'utilisation (figure 7), une largeur de l'ordre de 40cm et une hauteur de l'ordre de 45cm.

Un tel chariot de support 1, selon le mode de réalisation décrit ci-dessus, offre donc une grande facilité de transport, notamment d'accessoires de plage. Leur agencement et leur stockage est sécurisé, rationalisé et convivial sur la plage ou tout autre lieu de baignade. L'usage du PVC pour les parois formant le corps rigide du chariot 1 est peu coûteux et bien adapté à ce type de chariot de transport 1. Par ailleurs, la structure du chariot 1 assure in situ le rôle de lest et de socle pour le parasol 5. En position d'utilisation, le chariot de transport 1 remplit en outre une fonction de table de plage et crée alors un lieu d'unité, de convivialité et de bien être.

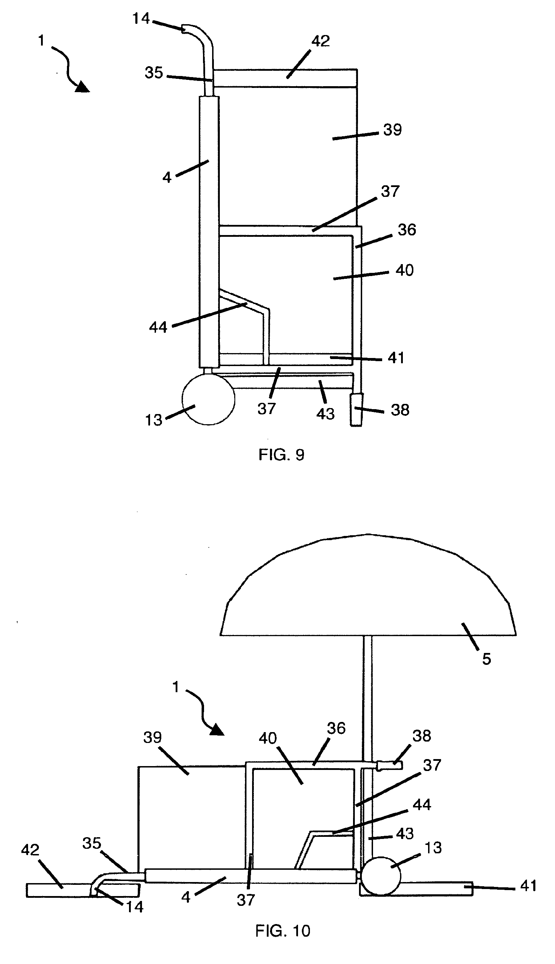

Dans la variante de réalisation représentée sur les figures 9 à 13, le chariot de transport 1 se distingue du chariot de transport représenté sur les figures 1 à 8, notamment par sa structure générale et par les accessoires qu'il peut transporter. Dans le mode particulier de réalisation des figures 9 à 13, le chariot de transport 1 présente le même principe que précédemment, à savoir un chariot 1 pouvant passer d'une première position redressée, ou position de transport (figure 9), à une seconde position allongée, ou position d'utilisation, avec la surface arrière du chariot 1 sensiblement parallèle au sol (figure 10).

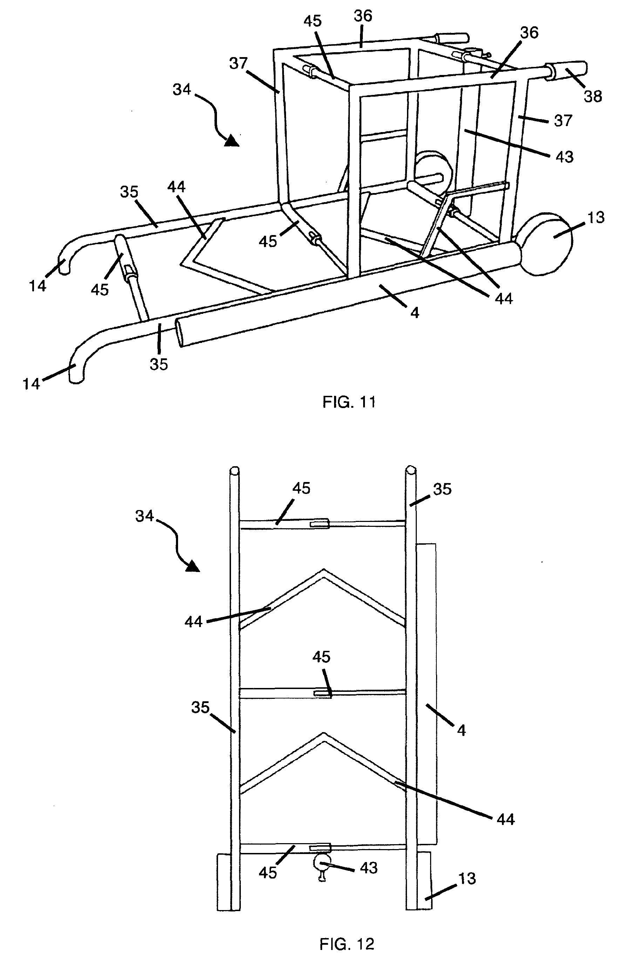

Sur les figures 11 à 13, le chariot 1 comporte une armature métallique 34, de préférence tubulaire, comprenant deux montants longitudinaux principaux 35, délimitant les bords de la surface arrière du chariot 1, et deux montants longitudinaux inférieurs 36, parallèles aux montants longitudinaux principaux 35 et de longueur inférieure. L'armature 34 comporte également quatre montants latéraux 37, reliant les montants longitudinaux 35 et 36 de l'armature 34, de sorte que l'armature métallique 34 présente sensiblement la forme d'une chaise (figure 11).

À titre d'exemple, l'armature métallique 34 est composée de tubes en aluminium, d'un diamètre de l'ordre de 15mm minimum et présente des dimensions générales du même ordre de grandeur que le mode particulier de réalisation du chariot de transport 1 représenté sur les figures 1 à 8.

Dans le mode particulier de réalisation des figures 9 à 13, les roues 13, pour le déplacement du chariot de transport 1, sont reliées, de préférence, à l'extrémité inférieure des montants longitudinaux principaux 35 et l'extrémité supérieure de chaque montant longitudinal principal 35 est, de préférence, recourbée, afin de servir d'appui et de support en position allongée d'utilisation du chariot 1 (figure 10). En position de transport du chariot 1 (figure 9), les extrémités recourbées jouent alors le rôle de poignées de préhension 14, permettant la manipulation du chariot 1. Par ailleurs, les montants longitudinaux inférieurs 36 sont dotés chacun à leur extrémité inférieure d'un pied 38, destiné à maintenir le chariot 1 en position verticale de repos, en attente de déplacement (figure 9).

Dans le mode particulier de réalisation des figures 9 et 10, le chariot de transport 1 est notamment destiné à transporter un sac de rangement 39 et une glacière 40 (représentés schématiquement sur les figures 9 et 10 pour des raisons de clarté). La forme particulière de l'armature métallique 34 permet de positionner la glacière 40 au niveau de la partie inférieure de l'armature 34, de forme sensiblement cubique (figures 9 et 11), et le sac de rangement 39 sur la partie supérieure de l'armature 34, au-dessus de la glacière 40 (figure 9).

À titre d'exemple, la glacière 40 peut comporter des crochets d'accrochage (non représentés), du type bande d'attache rapide, destinés à coopérer avec les montants de l'armature 34, afin d'accrocher et de décrocher facilement la glacière 40 de l'armature 34. La glacière 40 peut également être munie d'anses de transport (non représentées), afin de faciliter sa prise en main en cas d'utilisation de la glacière 40 en dehors de l'armature 34, et d'une ouverture accessible sur le dessus, en position d'utilisation du chariot 1.

Le sac de rangement 39 peut également être fixé de façon réversible sur les montants 35, 36, 37 de l'armature métallique 34, par l'intermédiaire, par exemple, de bandes d'attache rapide et peut également comporter des anses de transport (non représentées).

Par ailleurs, le sac de rangement 39 et la glacière 40 peuvent être réalisés en matériau souple, du type sac isotherme pour la glacière 40, et peuvent comporter des plaquettes de renfort dans leurs parois, afin de rigidifier le sac de rangement 39 et la glacière 40, pour alourdir le chariot 1 et servir éventuellement de table ou de support.

Comme représenté sur les figures 9 et 10, le chariot 1 comporte également des moyens de stabilisation, permettant de maintenir le chariot 1 en position d'utilisation (figure 10). Le chariot 1 comporte, de préférence, un lest inférieur 41, coopérant avec les montants latéraux 37 et les montants longitudinaux principaux 35 et inférieurs 36 de l'armature 34 et, de préférence, un lest supérieur 42, coopérant avec la partie supérieure des montants longitudinaux principaux 35 de l'armature métallique 34.

Sur la figure 9, en position de transport du chariot 1, le lest inférieur 41 est placé sous la glacière 40, tandis que le lest supérieur 42 est placé sur le dessus du sac de rangement 39. Sur la figure 10, en position d'utilisation du chariot de transport 1, les lests 41 et 42, fixés et articulés sur l'armature 34, sont rabattus contre le sol par l'intermédiaire, par exemple, d'un système de fermeture à glissière, permettant de faire passer les lests 41, 42 de leur position de transport, représentée sur la figure 9, à leur position utile de stabilisation du chariot 1, en position d'utilisation (figure 10).

À titre d'exemple, les lests 41, 42 sont conformés en enveloppes, par exemple en toile relativement souple, destinées à être remplies de matériaux du type eau, sable, graviers, cailloux, ou tout autre matériau permettant de lester les enveloppes. D'une façon générale, les enveloppes formant les lests 41, 42 peuvent être remplies de matériaux récupérés sur le lieux d'utilisation du chariot de transport 1, par exemple du sable en cas d'utilisation du chariot 1 sur une plage.

Par ailleurs, les lests 41, 42 peuvent avantageusement être renforcés, par l'intermédiaire de plaquettes rigides (non représentées), par exemple en matière plastique ou métallique, afin de leur conférer une certaine rigidité, notamment pour faciliter et améliorer leur positionnement contre le sol.

Comme représenté sur la figure 11, illustrant uniquement l'armature métallique 34 du chariot de transport 1, le tube cylindrique 4 formant le fourreau pour le positionnement du parasol 5 fermé est solidaire longitudinalement d'un des montants longitudinaux principaux 35. L'armature métallique 34 comporte un fourreau supplémentaire 43, conformé également en tube cylindrique fermé, disposé sensiblement perpendiculairement à la surface arrière du chariot 1, au niveau de la surface de support du chariot 1, et destiné à recevoir le parasol 5 en position d'utilisation (figure 10). Le fourreau 43 peut comporter un système de blocage de la tige du parasol 5, identique au système de blocage décrit précédemment pour le mode particulier de réalisation du chariot 1 représenté sur les figures 1 à 8.

Dans le mode particulier de réalisation des figures 9 à 13, l'armature métallique 34 peut comporter avantageusement des barres de renfort 44, permettant notamment de rigidifier l'armature 34. Le chariot 1 comporte, de préférence, deux barres de renfort 44, placées au niveau de la surface arrière du chariot 1 (figure 11), et deux barres de renfort 44, placées au niveau de l'emplacement réservé à la glacière 40 et reliant les montants longitudinaux principaux 35 aux montants latéraux 37 (figures 9 et 11). Les barres de renfort 44 sont, de préférence, déformables et articulées sur les montants 35, 36, 37 associées de l'armature 34, par exemple, par l'intermédiaire d'un dispositif du type charnières d'articulation des pieds d'une table de camping.

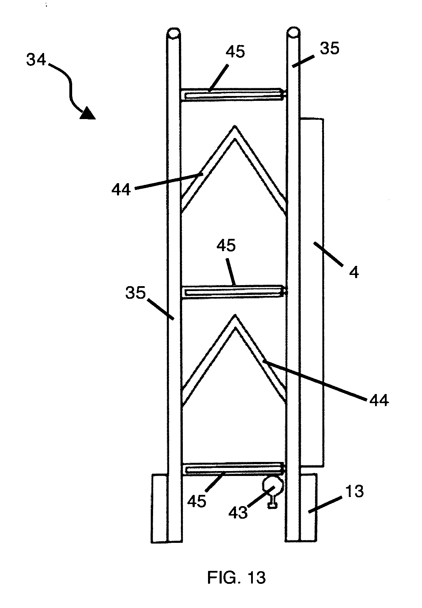

Par ailleurs, comme représenté sur les figures 12 et 13, la largeur de l'armature métallique 34 est réglable, quand les accessoires associés sont retirés, à savoir le sac de rangement 39 et la glacière 40. Il en résulte en gain de place en vue de son stockage et de son transport, notamment dans le coffre d'une voiture. À cet effet, l'armature métallique 34 comporte des traverses de liaison 45, de longueur ajustable, reliant les montants longitudinaux principaux 35 entre eux et les montants longitudinaux inférieurs 36 entre eux. Les traverses de liaison 45 sont disposées sensiblement parallèlement à la surface arrière du chariot 1 et à la surface de support du chariot 1.

À titre d'exemple, les traverses de liaison 45 sont des vérins coulissants, comprenant une tige d'un premier diamètre s'insérant dans un cylindre d'un diamètre supérieur. Sur la figure 11, l'armature 34 comporte, de préférence, trois traverses de liaison 45, reliant les montants longitudinaux principaux 35 au niveau des parties supérieure, centrale et inférieure de la surface arrière du chariot 1, et deux traverses de liaison 45, reliant les montants longitudinaux inférieurs 36 au niveau de leurs extrémités (figure 11).

Sur la figure 12, les traverses de liaison 45 sont dans leur position limite d'écartement, correspondant aux positions de transport et d'utilisation du chariot 1 (figures 9 et 10), tandis que sur la figure 13, les traverses de liaison 45 sont dans leur position limite de repli, correspondant à la position de stockage de l'armature 34 comme décrit précédemment. La tige de chaque traverse de liaison 45 a coulissée complètement à l'intérieur du cylindre associé, la distance entre les montants longitudinaux principaux 35 est minimale et les barres de renfort 44 se sont déformées et resserrées.

Un tel chariot de transport 1, selon le mode particulier de réalisation des figures 9 à 13, permet notamment d'obtenir, en plus des avantages décrits ci-dessus concernant le premier mode de réalisation des figures 1 à 8, un chariot 1 plus léger, plus maniable et plus simple à réaliser.

Quel que soit le mode de réalisation du chariot de transport 1 décrit ci-dessus, celui-ci permet de résoudre le problème de plantage de parasol en présentant deux positions distinctes, une position de transport et une position d'utilisation, dans laquelle le parasol est perpendiculaire à la surface arrière du chariot 1 et n'a pas besoin d'être planté dans le sol. Par ailleurs, les moyens de stabilisation du chariot 1, constitués soit par le corps rigide lui-même du chariot 1 (figures 1 à 8) soit par des lests amovibles 41, 42 (figures 9 à 13), permettent d'optimiser l'utilisation du chariot 1, quel que soit son lieu d'utilisation et les conditions climatiques (vent, pluie).

L'invention n'est pas limitée aux différents modes de réalisation décrits ci-dessus. Les dimensions, la forme et les matériaux du chariot de transport 1, de l'armature métallique 34 et des lests 41, 42 sont non limitatifs et dépendent des applications du chariot 1.

Dans le mode particulier de réalisation des figures 1 à 8, le dispositif en équerre 7 peut être remplacé par un compartiment de rangement fermé, adjacent à la glacière 2. Dans le mode particulier de réalisation des figures 1 à 9, le système d'articulation des lests 41, 42 peut être différent, tant qu'il permet une bonne articulation et une bonne stabilisation du chariot 1 en positon d'utilisation. Le système de fixation de la glacière 40 et du sac de rangement 39 sur l'armature métallique 34 peut être différent.

Dans tous les cas, d'autres systèmes de fixation du parasol 5 en position d'utilisation peuvent être envisagés, par exemple : bagues, doubles bagues, goupilles, solidarisation totale ou intégrée, pliage articulé et/ou flexible.

Par ailleurs, les éléments dossier/appui-tête 9 peuvent servir de support pour des matelas, des serviettes, ou pour tout autre objet dans tout type d'applications.

## Revendications

1. Chariot de transport (1) comportant :
- une surface arrière, constituant le dos du chariot (1) et s'étendant entre des moyens de préhension (14) et au moins une paire de roues (13), ladite surface arrière du chariot (1) étant redressée dans une position de transport,
- une surface de support, sensiblement perpendiculaire à la surface arrière du chariot (1),
- des premiers moyens pour positionner un parasol (5) plié sensiblement parallèlement à la surface arrière du chariot (1) en position de transport,
- et des seconds moyens pour positionner le parasol (5) dans une position d'utilisation,
chariot **caractérisé en ce que**, la surface arrière du chariot (1) étant disposée sensiblement parallèlement au sol dans ladite position d'utilisation, les seconds moyens (15, 43) sont agencés pour positionner le parasol (5) sensiblement perpendiculairement à la surface arrière du chariot (1) en position d'utilisation et le chariot (1) comporte des moyens de stabilisation en position d'utilisation.

2. Chariot selon la revendication 1, **caractérisé en ce que** lesdits moyens de stabilisation comportent au moins une enveloppe (41, 42) reliée au chariot (1) par des moyens de fixation et d'articulation et destinée à être remplie de lest.

3. Chariot selon la revendication 2, **caractérisé en ce que** le lest (41, 42) est constitué par un matériau choisi parmi l'eau, le sable, les graviers, les cailloux.

4. Chariot selon la revendication 1, **caractérisé en ce que** lesdits moyens de stabilisation du chariot (1) sont formés par des parties (2, 3, 39, 40) constituant le chariot (1).

5. Chariot selon l'une quelconque des revendications 1 à 4, **caractérisé en ce que** le chariot (1) comporte une armature métallique (34) comprenant une pluralité de montants longitudinaux (35, 36) et latéraux (37), délimitant au moins une zone de positionnement d'accessoires (39, 40).

6. Chariot selon la revendication 5, **caractérisé en ce que** l'armature métallique (34) comporte des traverses de liaison (45) de longueur ajustable, sensiblement parallèles à la surface arrière et à la surface de support du chariot (1).

7. Chariot selon l'une quelconque des revendications 1 à 4, **caractérisé en ce qu'**il comporte une structure rigide comportant une pluralité de parois pleines délimitant au moins une zone de positionnement d'accessoires (2, 3).

8. Chariot selon l'une quelconque des revendications 1 à 7, **caractérisé en ce qu'**il comporte des moyens de fixation d'au moins un élément (9) dossier/appui-tête, comportant deux pans (21, 22) sensiblement égaux et articulés autour d'un premier axe d'articulation (23), l'un des pans (21) étant divisé en deux parties (25, 26) articulées autour d'un second axe d'articulation (24), parallèle au premier axe d'articulation (23).
